# EUROPÄISCHE PATENTANMELDUNG

(11) **EP 1 886 575 A1**
(43) Veröffentlichungstag der Anmeldung: **13.02.2008**
(21) Anmeldenummer: 06016790.5
(22) Anmeldetag: 11.08.2006
(51) Int. Cl.: A23C 3/037

(54) **Verfahren und Vorrichtung zum Entziehen von Wasser aus einem fliessfähigen Medium**

(71) Anmelder: Stulz Wasser- und Prozesstechnik GmbH, 79865 Grafenhausen (DE)
(72) Erfinder: Finnah, Josef, 49661 Cloppenburg (DE)
(74) Vertreter: Stenger, Watzke & Ring

(57) **Zusammenfassung**

Die Erfindung betrifft ein Verfahren zum Entziehen von Wasser aus einem fließfähigen Medium, bei dem das eine vorbestimmbare Temperatur aufweisende und unter einem vorbestimmbaren Druck stehende Medium einem Entspannungskühler (2) zugeführt wird. Um ein verbessertes Verfahren zum Entziehen von Wasser aus einem fließfähigen Medium zu schaffen, wird mit der Erfindung vorgeschlagen, daß die infolge der Entspannung des Mediums innerhalb des Entspannungskühlers entstehenden Brüden angesaugt und zumindest teilweise durch einen Wärmetauscher geführt werden.

## Beschreibung

Die Erfindung betrifft ein Verfahren zum Entziehen von Wasser aus einem fließfähigen Medium, bei dem das eine vorbestimmbare Temperatur aufweisende und unter einem vorbestimmbaren Druck stehende Medium einem Entspannungskühler zugeführt wird. Des weiteren betrifft die Erfindung eine Vorrichtung zum Entziehen von Wasser aus einem fließfähigen Medium mit einem an eine Speiseleitung und an eine Abführleitung anschließbaren Entspannungskühler.

Entspannungskühler sowie Verfahren und Vorrichtungen zum Entziehen von Wasser aus einem fließfähigen Medium unter Verwendung eines Entspannungskühlers sind aus dem Stand der Technik hinlänglich bekannt, weshalb es eines gesonderten druckschriftlichen Nachweises an dieser Stelle nicht bedarf.

"Fließfähige Medien" im Sinne der Erfindung sind insbesondere zumindest während ihrer Herstellung fließfähige Lebensmittel, insbesondere Milchprodukte, wie beispielsweise Milch, Milchmischprodukte, Sahne oder dergleichen.

Aus dem Stand der Technik ist es bekannt, daß Milchprodukte zum Zwecke der gebrauchsfertigen Aufbereitung wärmebehandelt werden, um sie zum Beispiel zu homogenisieren oder zu pasteurisieren. Aus dem Stand der Technik sind zwei Wärmebehandlungsverfahren bekannt, um Milchprodukte einer Wärmebehandlung zu unterziehen. Gemäß dem ersten vorbekannten Verfahren, dem sogenannten indirekten Verfahren, wird das zu erwärmende Milchprodukt durch einen Wärmetauscher geführt, der im Parallel- oder Gegenstrom mit einem Heizmedium beschickt wird. Infolge der Hindurchführung des Milchproduktes durch den Wärmetauscher wird dieses auf die gewünschte Temperatur erwärmt. Gemäß dem zweiten aus dem Stand der Technik vorbekannten Verfahren, dem sogenannten direkten Verfahren, wird zur Erwärmung des Milchproduktes Sattdampf in dieses eingebracht. Es sind in diesem Zusammenhang das Dampfinjektionsverfahren einerseits sowie das Dampfinfusionsverfahren andererseits zu unterscheiden. Beim Dampfinjektionsverfahren wird zur Erwärmung des Milchproduktes Sattdampf in dieses eingeleitet, das heißt durch Injektion in dieses eingebracht. Beim Dampfinfusionsverfahren wird das zu erwärmende Milchprodukt in eine mit Sattdampf befüllte Kammer eingesprüht, infolgedessen sich der Sattdampf unter Aufwärmung des Milchproduktes mit diesem vermischt.

Beim direkten Erwärmungsverfahren, das heißt sowohl beim Dampfinjektionsverfahren als auch beim Dampfinfusionsverfahren steigt infolge des Eintrags von Sattdampf in das Milchprodukt der Wassergehalt im Milchprodukt. Das vom Milchprodukt infolge des Sattdampfeintrages aufgenommene Wasser muß nach erfolgter Wärmebehandlung aus dem Milchprodukt wieder entfernt werden, nicht zuletzt um die gesetzlichen Bestimmungen hinsichtlich des maximalen Wassergehaltes in einem Milchprodukt zu erfüllen.

Aus dem Stand der Technik ist es bekannt, Entspannungskühler einzusetzen, um einem fließfähigen Medium, das heißt einem Milchprodukt Wasser zu entziehen. Zu diesem Zweck wird das eine vorbestimmbare Temperatur aufweisende und unter einem vorbestimmbaren Druck stehende Medium in einen Entspannungskühler eingeleitet. Aufgrund des im Entspannungskühler herrschenden Normaldrucks entspannt sich das in den Entspannungskühler eingeführte Medium schlagartig, wodurch dieses unter Entstehung von sogenannten Brüden teilweise verdampft. Die Brüden bestehen je nach vorbestimmbarer Temperatur und vorbestimmbaren Druck des Mediums vor Einleitung in den Entspannungskühler zu ca. 5 % bis hin zu 50 % aus Wasserdampf. Die infolge der Entspannung des Mediums entstehenden Brüden werden zusammen mit dem darin enthaltenen Wasserdampf aus dem Entspannungskühler abgeführt, wodurch es zu einer Reduzierung der zuvor durch Dampfinjektion oder Dampfinfusion in das Medium eingebrachten Wassermenge kommt. Im Entspannungskühler verbleibt somit ein infolge der Entspannung abgekühltes und wasserreduziertes Medium, das zur weiteren Verarbeitung dem Entspannungskühler entnommen werden kann.

Obgleich sich das vorbekannte Verfahren zum Entziehen von Wasser aus einem fließfähigen Medium unter Verwendung eines Entspannungskühlers im alltäglichen Praxiseinsatz bewährt hat, besteht Verbesserungsbedarf, insbesondere mit Blick auf eine vereinfachte und wirtschaftlichere Verfahrensdurchführung.

Es ist deshalb die **Aufgabe** der Erfindung, ein gegenüber dem Stand der Technik verbessertes Verfahren zum Entziehen von Wasser aus einem fließfähigen Medium anzugeben. Ferner soll mit der Erfindung eine verbesserte Vorrichtung zum Entziehen von Wasser aus einem fließfähigen Medium vorgeschlagen werden.

Verfahrensseitig wird zur **Lösung** der Erfindung vorgeschlagen, daß die infolge der Entspannung des Mediums innerhalb des Entspannungskühlers entstehenden Brüden angesaugt und zumindest teilweise durch einen Wärmetauscher geführt werden.

Vorrichtungsseitig wird zur **Lösung** der Aufgabe vorgeschlagen eine Vorrichtung zum Entziehen von Wasser aus einem fließfähigen Medium mit einem an eine Speiseleitung und an eine Abführleitung anschließbaren Entspannungskühler, die durch einen Wärmetauscher gekennzeichnet ist, der strömungstechnisch mit dem Innenraum des Entspannungskühlers in Verbindung steht.

Verfahrensseitig wird mit der Erfindung im Unterschied zum Stand der Technik vorgeschlagen, daß die infolge der Entspannung des Mediums im Inneren des Entspannungskühlers entstehenden Brüden nicht einfach abgeführt sondern angesogen und zumindest teilweise durch einen Wärmetauscher geführt werden. Die Hindurchführung der infolge der Entspannung des Mediums entstehenden Brüden durch einen Wärmetauscher hat im wesentlichen zwei Vorteile. Ein erster Vorteil ist dadurch gegeben, daß eine Wärmerückgewinnung hinsichtlich der in den Brüden vorhandenen Wärme möglich ist. Die aus den Brüden zurückgewonnene Wärme kann beispielsweise dazu genutzt werden, das fließfähige Medium im Zuge des der Entspannung vorangehenden Wärmebehandlungsverfahrens vorzuwärmen. Die erfindungsgemäße Verfahrensdurchführung erweist sich insofern als gegenüber dem Stand der Technik wirtschaftlicher. Ein zweiter Vorteil des erfindungsgemäßen Verfahrens besteht darin, daß es infolge des Hindurchführens der Brüden durch den Wärmetauscher zu einem Auskondensieren des in den Brüden enthaltenen Wasserdampfes im Wärmetauscher kommt. Die Menge des dem Medium entzogenen Wassers kann so genau bestimmt werden, was bei den aus dem Stand der Technik vorbekannten Verfahren nicht möglich ist. Je nach vorbestimmbarer Temperatur und vorbestimmbaren Druck des Mediums vor Einführung in den Entspannungskühler enthalten die infolge einer Entspannung des Mediums entstehenden Brüden unterschiedlich viel Wasserdampf. Bei aus dem Stand der Technik bekannten Verfahren werden die im Entspannungskühler entstehenden Brüden samt des darin in seiner Menge nicht näher bestimmbaren Wasserdampfes aus dem Entspannungskühler in die Atmosphäre entlassen, so daß nicht genau bestimmt werden kann, wieviel Wasserdampf, das heißt wieviel Wasser dem Medium mittels der Entspannung entzogen werden konnte. Beim erfindungsgemäßen Verfahren ist dies anders. Da eine zumindest teilweise Auskondensation des in den Brüden enthaltenen Wasserdampfes im erfindungsgemäß vorgesehenen Wärmetauscher stattfindet, kann die dem Medium entzogene Menge an Wasser genau bestimmt werden. Dies erlaubt eine optimierte und insgesamt vereinfachte Verfahrensdurchführung, weil die dem Medium entzogene Menge an Wasser genau bestimmt und nicht zuletzt dazu genutzt werden kann, die gesamte Verfahrensdurchführung durch Vorsehen einer entsprechenden Regelungseinrichtung zu automatisieren.

Gemäß einem weiteren Merkmal der Erfindung ist vorgesehen, daß der Wärmetauscher ein Röhrenbündelwärmetauscher ist, der im Parallelstrom betrieben wird. Es ist selbstredend auch ein Betrieb im Gegenstrom möglich, doch es hat sich insbesondere der Parallelstrom als vorteilhaft erwiesen, weil hierdurch bessere Regelungsmöglichkeiten hinsichtlich der wunschgemäß zu erzielenden Auskondensation des in den Brüden enthaltenen Wasserdampfes möglich sind.

Der Rohrbündelwärmetauscher verfügt über eine Mehrzahl von Innenrohren, durch die hindurch gemäß einem weiteren Merkmal der Erfindung die Brüden geführt werden. Durch den Ringraum des Rohrbündelwärmetauschers wird zum Zwecke der Abkühlung der durch den Röhrenbündelwärmetauscher geführten Brüden ein Austauschermedium geführt, welches sich infolge der Hindurchführung durch den Rohrbündelwärmetauscher erwärmt. Das den Rohrbündelwärmetauscher verlassende und erwärmte Austauschermedium kann in vorteilhafter Weise dazu genutzt werden, in dem der Entspannung des Mediums vorangehenden Wärmebehandlungsverfahren zur Erwärmung, vorzugsweise zur Vorwärmung des wärmezubehandelnden Mediums eingesetzt zu werden. Bei den aus dem Stand der Technik vorbekannten Verfahren ist eine Wärmerückgewinnung hinsichtlich der in den Brüden vorhandenen Wärme nicht vorgesehen, weshalb sich das erfindungsgemäße Verfahren in vorteilhafter Weise auch aus Gründen der Wirtschaftlichkeit auszeichnet.

Gemäß einem weiteren Merkmal der Erfindung ist vorgesehen, daß das Ansaugen und zumindest teilweise Hindurchführen der Brüden durch den Wärmetauscher mittels einer Vakuumpumpe durchgeführt wird. Bevorzugterweise ist die Vakuumpumpe über eine Rohrleitung einendseitig an den Röhrenwärmetauscher angeschlossen. Im Betriebsfall saugt die Vakuumpumpe über die daran angeschlossene Rohrleitung die im Entspannungskühler befindlichen Brüden an, die auf ihrem Weg in Richtung auf die Vakuumpumpe den Wärmetauscher passieren, wo es in der vorbeschriebenen Weise zu einer Abkühlung der Brüden und damit zu einer zumindest teilweisen Auskondensation des in den Brüden befindlichen Wasserdampfes kommt.

Zur Durchführung des vorbeschriebenen Verfahrens kommt vorrichtungsseitig ein Entspannungskühler zum Einsatz, dessen Innenraum in strömungstechnischer Verbindung mit einem Wärmetauscher steht. Bei dem Wärmetauscher handelt es sich vorzugsweise um einen im Parallelstrom betreibbaren Rohrbündelwärmetauscher, wie vorstehend erläutert.

Gemäß einem weiteren Vorrichtungsmerkmal der Erfindung ist vorgesehen, daß die infolge der Entspannung des Mediums innerhalb des Entspannungskühlers entstehenden Brüden aus dem Entspannungskühler durch den Wärmetauscher hindurch an- und/oder absaugbar sind. Zu diesem Zweck ist eine Vakuumpumpe vorgesehen, die ausgangsseitig entweder direkt oder unter Zwischenschaltung einer Rohrleitung indirekt an den Wärmetauscher angeschlossen ist.

Der Wärmetauscher kann außerhalb des Entspannungskühlers angeordnet sein. In diesem Fall steht der Innenraum des Entspannungskühlers mit dem Wärmetauscher über eine entsprechend ausgebildete Rohrleitung in Verbindung. Gemäß einer alternativen und bevorzugten Ausführungsform der Erfindung ist der Wärmetauscher zumindest zum Teil innerhalb des Entspannungskühlers angeordnet. Das Brüdeneinsaugende des Wärmetauschers ist in diesem Fall im Innenraum des Entspannungskühlers angeordnet, so daß es keiner zusätzlichen Rohrverbindung zwischen dem Wärmetauscher einerseits und den Innenraum des Entspannungskühlers andererseits bedarf. Zudem erweist sich die erfindungsgemäße Vorrichtung bei einer zumindest teilweisen Anordnung des Wärmetauschers innerhalb des Entspannungskühlers in ihrer Bauform als besonders kompakt.

Gemäß einem weiteren Vorrichtungsmerkmal der Erfindung ist vorgesehen, daß der Entspannungskühler, die daran anschließbaren Leitungen und der Wärmetauscher aus einem korrosionsbeständigen und lebensmittelneutralen Material bestehen, wie zum Beispiel nicht rostender Edelstahl. Auf diese Weise wird sowohl eine ungewünschte Korrosion der vorrichtungsseitigen Bauteile als auch eine ungewollte Beeinträchtigung des Mediums sichergestellt.

Gemäß einem weiteren und besonderen Merkmal der Erfindung ist die Vorrichtung durch eine Regelungseinrichtung gekennzeichnet, die mit einer Meßeinrichtung die Menge des infolge der Abkühlung der Brüden im Wärmetauscher entstehenden Wassers mißt und ein der ermittelten Wassermenge entsprechendes Signal abgibt, die mit einer Vergleichsschaltung dieses Signal mit einem vorgebbaren Sollwert vergleicht und bei Ungleichheit die Menge und/oder die Temperatur des in den Wärmetauscher eingeführten Austauschermedium nacheinstellt.

Die nach der erfindungsgemäßen Verfahrensdurchführung dem Medium entzogene Menge an Wasser ist aus den vorgenannten Gründen in vorteilhafter Weise genau bestimmbar. In vorteilhafter Weise ist es deshalb möglich, mit einer Regelungseinrichtung den gesamten Verfahrensdurchgang zu überwachen und im Bedarfsfall nachzuregeln. Zu diesem Zweck ist vorgesehen, daß die Regelungseinrichtung über eine Meßeinrichtung verfügt, die die Menge des infolge der Abkühlung der Brüden im Wärmetauscher entstehenden Wassers mißt. In Abhängigkeit der von der Meßeinrichtung detektierten Menge an Wasser, welches dem Medium entzogen wurde, gibt die Meßeinrichtung ein entsprechendes Signal ab. Dieses Signal wird an eine Vergleichsschaltung weitergeleitet, wo dieses Signal dann mit einem vorgebbaren Sollwert verglichen wird. Der Sollwert ist vorgebbar und ergibt sich in Abhängigkeit derjenigen Wassermenge, die insbesondere nach gesetzlicher Vorschrift im entspannten Medium maximal noch enthalten sein darf bzw. in Abhängigkeit der dem Medium vor seiner Entspannung im Rahmen einer zuvor durchgeführten Wärmebehandlung durch Dampfinjektion oder Dampfinfusion zugeführten Menge an Wasser. Stellt die Regelungseinrichtung eine Ungleichheit zwischen dem von der Meßeinrichtung gelieferten Signal einerseits und dem vorgebbaren Sollwert andererseits fest, so erfolgt eine Nachregelung, beispielsweise dadurch, daß die Menge und/oder die Temperatur des in den Wärmetauscher eingeführten Austauschermediums nacheingestellt wird. Darüber hinaus ist es natürlich auch möglich, in Ergänzung zur vorbeschriebenen Regelungsautomatik oder alternativ hierzu, die Parameter der der Entspannung des Mediums vorangehenden Wärmebehandlung nacheinzustellen, wobei eine solche Nacheinstellung nur in engen Grenzen möglich ist, um die wunschgemäß zu erzielende Wärmebehandlung des Mediums nicht nachteilig zu beeinflussen.

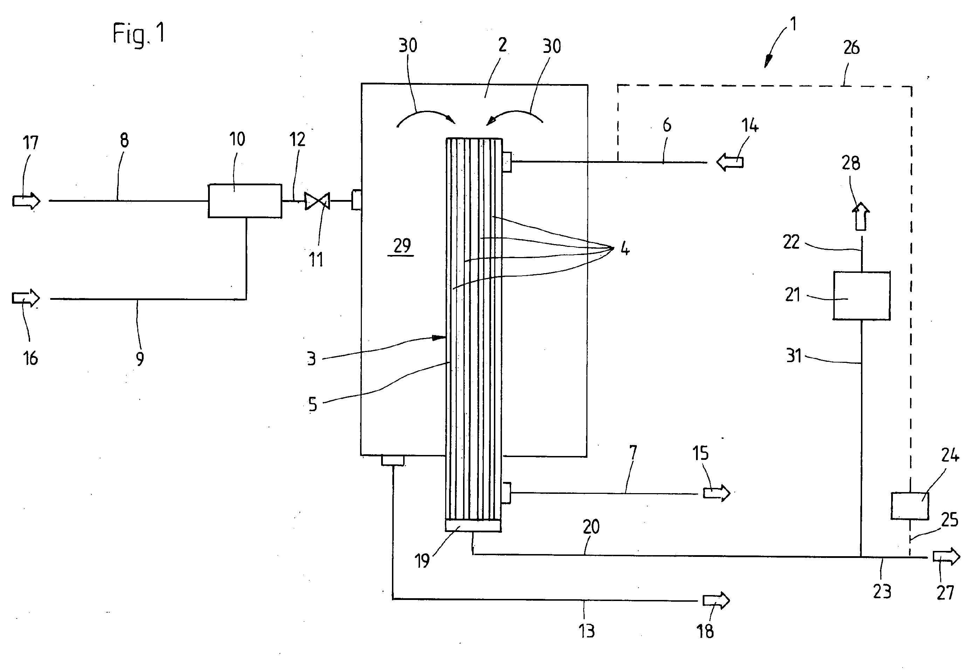

Weitere Merkmale und Vorteile der Erfindung ergeben sich aus der nachfolgenden Beschreibung anhand der einzigen Fig. 1, die in einem Blockdiagramm schematisch die erfindungsgemäße Vorrichtung zur Durchführung des erfindungsgemäßen Verfahrens zeigt.

Fig. 1 zeigt in Form eines schematischen Blockdiagramms die erfindungsgemäße Vorrichtung 1 zum Entziehen von Wasser aus einem fließfähigen Medium. Als "fließfähiges Medium" kommt dem Grunde nach jedes Medium in Frage, dem wunschgemäß Wasser zu entziehen ist. Die in Fig. 1 gezeigte Vorrichtung dient insbesondere dazu, einem flüssigen Lebensmittel, insbesondere einem Milchprodukt, wie beispielsweise Milch, Milchmischprodukte, Sahne oder dergleichen Wasser zu entziehen. Der Entzug von Wasser aus einem Milchprodukt, wie beispielsweise Milch, Milchmischprodukte, Sahne oder dergleichen kann deshalb erforderlich werden, weil das Milchprodukt im Zuge eines direkten Wärmebehandlungsverfahrens durch Dampfinjektion oder Dampfinfusion zum Zwecke der Homogenisierung, Pasteurisierung oder dergleichen mit Wasser angereichert worden ist. Um insbesondere den gesetzlichen Bestimmungen hinsichtlich der Wassermenge, die in einem endfertigen, das heißt gebrauchsfertigen Milchprodukt maximal enthalten sein darf, gerecht zu werden, muß das infolge eines direkten Wärmebehandlungsverfahrens durch Dampfinjektion oder Dampfinfusion in das Milchprodukt eingebrachte Wasser aus diesem wieder entfernt werden. Diesem Zweck dient die erfindungsgemäße Vorrichtung 1 zum Entziehen von Wasser aus einem fließfähigen Medium, wie es in schematischer Blockdarstellung in Fig. 1 gezeigt ist.

Die erfindungsgemäße Vorrichtung 1 verfügt über einen Entspannungskühler 2. An diesen Entspannungskühler 2 ist eingangsseitig eine Speiseleitung 12 angeschlossen, in welcher ein Zuflußventil 11 integriert ist. Anderendseitig ist die Speiseleitung 12 an eine Kammer 10 angeschlossen, die ihrerseits an eine Produkt- oder Mediumleitung 8 einerseits und an eine Dampfleitung 9 andererseits angeschlossen ist.

In Richtung des Pfeils 17 wird durch die Produkt- oder Mediumleitung 8 ein wärmezubehandelndes Produkt oder Medium, wie beispielsweise Milch, Milchmischprodukte, Sahne oder dergleichen geführt. Über die Produkt- oder Mediumleitung 8 gelangt das Produkt oder Medium in die Kammer 10.

In Richtung des Pfeils 16 wird durch die Dampfleitung 9 Sattdampf geführt, der gleichfalls der Kammer 10 zugeführt wird. Innerhalb der Kammer 10 kommt es zu einer Wärmebehandlung des über die Produkt- oder Mediumleitung 8 in die Kammer 10 eingeführten Produktes oder Mediums durch Dampfinjektion oder Dampfinfusion. Das auf diese Weise erwärmte und mit heißem Wasserdampf versetzte Produkt oder Medium gelangt sodann über die Speiseleitung 12 in den Entspannungskühler 2. Je nach Produkt kann dieses eine Temperatur von ca. 150°C bei Einführung in den Entspannungskühler 2 aufweisen. Das Produkt steht je nach Produkt dabei unter einem Druck von ca. 4,5 bar. Mittels des in der Speiseleitung 12 integrierten Ventils 11 kann die Speiseleitung 12 geschlossen oder geöffnet werden, so daß über das Ventil 11 sichergestellt ist, daß in den Entspannungskühler 2 das Produkt oder das Medium nur eingeleitet wird, wenn es wunschgemäß die vorbestimmbare Temperatur von zum Beispiel 150°C aufweist und/oder unter dem vorbestimmbaren Druck von zum Beispiel 4,5 bar steht.

Erfindungsgemäß verfügt die Vorrichtung 1 über einen Wärmetauscher in Form eines Röhrenwärmetauschers 3. Dieser steht mit dem Innenraum 29 des Entspannungskühlers 2 in strömungstechnischer Verbindung, was in dem gezeigten Ausführungsbeispiel nach Fig. 1 dadurch realisiert ist, daß der Rohrbündelwärmetauscher 3 zumindest teilweise, das heißt eingangsseitig innerhalb des Entspannungskühlers 2 angeordnet ist.

Der Rohrbündelwärmetauscher verfügt in an sich bekannter Weise über eine Mehrzahl von Innenrohren 4, die gegenüber dem Ringraum 5 des Röhrenwärmetauschers 3 abgedichtet sind.

Der Ringraum 5 des Röhrenwärmetauschers 3 ist an eine Zuflußleitung 6 und an eine Abflußleitung 7 angeschlossen, durch die ein Austauschermedium zur Hindurchführung durch den Ringraum 5 geführt werden kann. Im gezeigten Ausführungsbeispiel strömt das Austauschermedium in Entsprechung der Richtung des Pfeils 14 durch die Zuführleitung 6 in den Ringraum 5 des Röhrenwärmetauschers 3. Über die Abflußleitung 7 wird das Austauschermedium in Entsprechung der Richtung des Pfeils 15 aus dem Ringraum 5 des Röhrenwärmetauschers 3 abgeführt.

Der Röhrenwärmetauscher 3 ist ausgangsseitig, das heißt mit seinem aus dem Entspannungskühler 2 herausreichenden Endbereich an einen Anschluß 19 angeschlossen. Dieser Anschluß 19 ist seinerseits an eine Ansaugleitung 20 angeschlossen, die sich in Strömungsrichtung in eine Wasserleitung 23 und eine Dampfleitung 31 verzweigt.

Im gezeigten Ausführungsbeispiel ist in die Dampfleitung 31 eine Vakuumpumpe 21 integriert. Diese kann selbstredend auch in anderer Weise installiert sein, so zum Beispiel in die Ansaugleitung 20. Gleichfalls ist es auch möglich, die Vakuumpumpe 21 direkt an den Röhrenwärmetauscher 3 anzuflanschen. Insoweit soll das in Fig. 1 beschriebene Ausführungsbeispiel nicht beschränkend sein.

An den Entspannungskühler 2 ist des weiteren eine Abführleitung 13 angeschlossen. Das dem Entspannungskühler 2 über die Speiseleitung 12 zugeführte Medium verläßt den Entspannungskühler 2 nach einer Entspannung durch die Abführleitung 13, und zwar in Richtung des Pfeils 18.

Die erfindungsgemäße Verfahrensdurchführung geht unter Bezugnahme auf Fig. 1 wie folgt von statten:

Das auf eine vorbestimmbare Temperatur erwärmte und unter einem vorbestimmbaren Druck stehende Medium wird über die Speiseleitung 12 dem Entspannungskühler 2 zugeführt. Der Innenraum 29 des Entspannungskühlers 2 steht unter Normaldruck. Infolgedessen kommt es hinsichtlich des unter Temperatur und Druck stehenden Mediums bei einem Einführen desselben in den Innenraum 29 des Entspannungskühlers 2 zu einer schlagartigen Entspannung des Mediums, und zwar mit der Folge, daß dieses zumindest zum Teil verdampft, wodurch sogenannte Brüden entstehen. Je nach Medium, Temperatur und/oder Druck des Mediums enthalten die infolge der zumindest teilweisen Verdampfung des Mediums entstehenden Brüden Sattdampf in einer Menge von ca. 5 % bis 50 %.

Die im Innenraum 29 des Entspannungskühlers 2 entstehenden Brüden werden mittels der Vakuumpumpe 21 angesaugt, infolgedessen sie durch die Innenrohre 4 des Rohrbündelwärmetauschers 3 geführt werden. Das Ansaugen der Brüden ist in Fig. 1 schematisch durch die Pfeile 30 dargestellt.

Infolge des Hindurchführens der Brüden durch den Rohrbündelwärmetauscher 3 werden diese abgekühlt, was zu einer zumindest teilweisen Auskondensation des in den Brüden enthaltenen Wasserdampfes führt.

Das durch Auskondensation aus den Brüden entstehende Wasser wird über die Wasserleitung 23 in Richtung des Pfeils 27 abgeführt. Unter Umständen nicht auskondensierter Wasserdampf bzw. aus dem Innenraum 29 des Entspannungskühlers 2 stammende und in den Brüden enthaltene Luft gelangt über die Ansaugleitung 20 und die Dampfleitung 31 zum Austritt 22, und zwar in Richtung des Pfeils 28.

Das entspannte und von Wasser wunschgemäß befreite Medium verläßt den Entspannungskühler 2 über die Abführleitung 13 in Richtung des Pfeils 18.

In der Praxis hat es sich als besonders vorteilhaft herausgestellt, den Entspannungskühler 2 im Querschnitt zylindrisch auszuführen. Das über die Speiseleitung 12 in den Entspannungskühler 2 geführte Medium wird vorzugsweise auf die Innenoberfläche des zylindrisch ausgebildeten Entspannungskühlers aufgegeben, wo es an der Innenwand des Entspannungskühlers wendelförmig entlang in Richtung auf den Anschluß der Abführleitung 13 mit Bezug auf die Zeichnungsebene nach Fig. 1 nach unten strömt.

Der Vorteil der erfindungsgemäßen Verfahrensdurchführung liegt unter anderem darin, daß mittels des Röhrenwärmetauschers 3 eine Wärmerückgewinnung bezüglich der in den heißen Brüden enthaltenen Wärme möglich ist. Zudem erlaubt die erfindungsgemäße Verfahrensdurchführung eine zielgesteuerte Regelung des gesamten Ablaufprozesses, weil im Unterschied zu den aus dem Stand der Technik bekannten Verfahren die dem Medium entzogene Menge an Wasser genau bestimmbar ist.

Zum Zwecke der Regelung verfügt die erfindungsgemäße Vorrichtung über eine Regeleinrichtung 24. Die Regeleinrichtung 24 verfügt ihrerseits über eine Meßeinrichtung, die in kommunikationstechnischer Verbindung 25 mit der Wasserleitung 23 steht. Die über die Wasserleitung 23 abgeführte Menge an aus den Brüden auskondensiertem Wasserdampf wird mittels der Meßeinrichtung erfaßt. Die Meßeinrichtung gibt ein der detektierten Wassermenge entsprechendes Signal an die Regeleinrichtung 24 ab, die mit einer Vergleichsschaltung das von der Meßeinrichtung gelieferte Signal mit einem vorgebbaren Sollwert vergleicht. Bei Ungleichheit wird die Menge und/oder die Temperatur des in den Röhrenwärmetauscher 3 eingeführten Austauschermediums nacheingestellt, was in der Fig. schematisch durch die kommunikationstechnische Verbindung 26 zwischen Regeleinrichtung 24 und Zuführleitung 6 für das Austauschermedium dargestellt ist.

Die vorstehenden Ausführungen unter Bezugnahme auf das Ausführungsbeispiel nach Fig. 1 sind sowohl für die erfindungsgemäße Verfahrensdurchführung als auch für die erfindungsgemäße Vorrichtung nicht beschränkend. So können insbesondere die einzelnen Baukomponenten der erfindungsgemäßen Vorrichtung anders als in Fig. 1 dargestellt angeordnet sein. Von erfindungswesentlicher Bedeutung ist allein, daß die infolge der Entspannung des Mediums innerhalb des Entspannungskühlers 2 entstehenden Brüden angesaugt und zumindest teilweise durch einen Wärmetauscher geführt werden.

### Bezugszeichenliste

- 1: Vorrichtung
- 2: Entspannungskühler
- 3: Röhrenwärmetauscher
- 4: Innenrohr
- 5: Ringraum
- 6: Zuflußleitung
- 7: Abflußleitung
- 8: Produktleitung
- 9: Dampfleitung
- 10: Kammer
- 11: Ventil
- 12: Speiseleitung
- 13: Abführleitung
- 14: Pfeil
- 15: Pfeil
- 16: Pfeil
- 17: Pfeil
- 18: Pfeil
- 19: Anschluß
- 20: Ansaugleitung
- 21: Vakuumpumpe
- 22: Austritt
- 23: Wasserleitung
- 24: Regeleinrichtung
- 25: kommunikationstechnische Verbindung
- 26: kommunikationstechnische Verbindung
- 27: Pfeil
- 28: Pfeil
- 29: Innenraum
- 30: Pfeil
- 31: Dampfleitung

## Patentansprüche

1. Verfahren zum Entziehen von Wasser aus einem fließfähigen Medium, bei dem das eine vorbestimmbare Temperatur aufweisende und unter einem vorbestimmbaren Druck stehende Medium einem Entspannungskühler (2) zugeführt wird,
**dadurch gekennzeichnet,**
**daß** die infolge der Entspannung des Mediums innerhalb des Entspannungskühlers (2) entstehenden Brüden angesaugt und zumindest teilweise durch einen Wärmetauscher geführt werden.

2. Verfahren nach Anspruch 1, **dadurch gekennzeichnet, daß** der Wärmetauscher ein Rohrbündelwärmetauscher (3) ist, der im Parallelstrom betrieben wird.

3. Verfahren nach Anspruch 2, **dadurch gekennzeichnet, daß** die Brüden durch die Innenrohre (4) des Rohrbündelwärmetauschers (3) geführt werden.

4. Verfahren nach Anspruch 2, **dadurch gekennzeichnet, daß** durch den Ringraum (5) des Rohrbündelwärmetauschers (3) ein Austauschermedium geführt wird.

5. Verfahren nach einem der vorhergehenden Ansprüche, **dadurch gekennzeichnet, daß** das Ansaugen und zumindest teilweise Hindurchführen der Brüden durch den Wärmetauscher mittels einer Vakuumpumpe (21) durchgeführt wird.

6. Vorrichtung zum Entziehen von Wasser aus einem fließfähigen Medium mit einem an eine Speiseleitung (12) und an einer Abführleitung (13) anschließbaren Entspannungskühler (2), **gekennzeichnet durch** einen strömungstechnisch mit dem Innenraum (29) des Entspannungskühlers (2) in Verbindung stehenden Wärmetauscher.

7. Vorrichtung nach Anspruch 6, **dadurch gekennzeichnet, daß** der Wärmetauscher ein im Parallelstrom betreibbarer Rohrbündelwärmetauscher (3) ist.

8. Vorrichtung nach Anspruch 6 oder 7, **dadurch gekennzeichnet, daß** die infolge der Entspannung des Mediums innerhalb des Entspannungskühlers (2) entstehenden Brüden aus dem Entspannungskühler (2) durch den Wärmetauscher hindurch ansaugbar sind.

9. Vorrichtung nach Anspruch 6, 7 oder 8, **gekennzeichnet durch** eine Vakuumpumpe (21).

10. Vorrichtung nach einem der vorhergehenden Ansprüche 6 bis 9, **dadurch gekennzeichnet, daß** der Wärmetauscher zumindest zum Teil innerhalb des Entspannungskühlers (2) angeordnet ist.

11. Vorrichtung nach einem der vorhergehenden Ansprüche 6 bis 10, **dadurch gekennzeichnet, daß** der Entspannungskühler (2), die daran anschließbaren Leitungen (12, 13) und der Wärmetauscher aus einem korrosionsbeständigen und lebensmittelneutralen Material bestehen.

12. Vorrichtung nach einem der vorhergehenden Ansprüche 6 bis 11, **gekennzeichnet durch** eine Regelungseinrichtung (24), die mit einer Meßeinrichtung die Menge des infolge der Abkühlung der Brüden im Wärmetauscher entstehenden Wassers mißt und ein der ermittelten Wassermengen entsprechendes Signal abgibt, die mit einer Vergleichsschaltung dieses Signal mit einem vorgebbaren Sollwert vergleicht und bei Ungleichheit die Menge und/oder die Temperatur des in den Wärmetauscher eingeführten Austauschermediums nacheinstellt.
